(19) Europäisches Patentamt
European Patent Office
Office européen des brevets

(11) **EP 3 021 105 A1**

(12) **EUROPEAN PATENT APPLICATION**
published in accordance with Art. 153(4) EPC

(43) Date of publication:
**18.05.2016 Bulletin 2016/20**

(51) Int Cl.:
***G01N 21/64*** *(2006.01)*

(21) Application number: **14844455.7**

(22) Date of filing: **12.09.2014**

(86) International application number:
**PCT/JP2014/074302**

(87) International publication number:
**WO 2015/037724 (19.03.2015 Gazette 2015/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.09.2013 JP 2013190414**
**24.04.2014 JP 2014089699**

(71) Applicant: **Mitsubishi Rayon Co., Ltd.**
**Tokyo 100-8253 (JP)**

(72) Inventor: **SHIMIZU Kouji**
**Yokohama-shi**
**Kanagawa 230-0053 (JP)**

(74) Representative: **Hoffmann Eitle**
**Patent- und Rechtsanwälte PartmbB**
**Arabellastraße 30**
**81925 München (DE)**

(54) **IMAGE READING METHOD**

(57)    Through the present invention, more rapid detection time and reduced volume of detection data are realized during reading of fluorescence intensity from a fluorescence image. The present invention is an image reading method for reading a fluorescence image from a sample in which a plurality of fluorescent regions are present, and has (a) a step for setting a first image capture condition, (b) a step for capturing a fluorescence image in the first image capture condition, (c) a step for calculating a fluorescence intensity of each of a plurality of regions included in the captured fluorescence image, (d) a step for determining whether to end image capture on the basis of the calculated fluorescence intensities of the regions, (e) a step for setting a next image capture condition on the basis of the fluorescence intensities of the regions calculated in step (c) when a decision is made in step (d) not to end image capture, (f) a step for capturing a fluorescent image in the next image capture condition, and (g) a step for repeating steps (c) through (f) until a determination is made in step (d) to end image capture.

FIG.5

**Description**

Field of the Invention

The present invention relates to a method for reading fluorescence images of a specimen that contains multiple regions emitting fluorescence light at different intensities.

Background Art

When fluorescence light is observed by using a fluorescence measurement device such as a laser scanner for fluorescence imaging or a fluorescence microscope, specimens may contain multiple regions emitting fluorescence light at various intensities in the observation range.

Biochips are known as specimens where from some dozens to several tens of thousands of different bio-related materials such as DNA, proteins and antibodies as probes are immobilized. Intensities of fluorescence light detected in a biochip may vary in a wide range from weak to strong.

When fluorescence images are scanned, a greater amount of information is usually obtained by setting a condition to receive more light.

However, if the output intensity of excitation light and exposure conditions such as exposure time are adjusted for capturing images so as to avoid fluorescence intensity saturation in a region emitting strong fluorescence, the brightness of a region emitting weak fluorescence is insufficient. As a result, fluorescence intensities are not detected accurately.

On the other hand, if the output intensity of excitation light and exposure conditions such as exposure time are adjusted for capturing images so as to set a sufficient brightness level for a region emitting weak fluorescence, the fluorescence intensity in a region emitting strong fluorescence is saturated. Accordingly, these fluorescence intensities are not accurately detected, either. Such problems occur when the dynamic range of fluorescence intensities emitted from the imaging target is greater than the dynamic range of the detector device.

To solve the above problems, a method such as follows is known for detecting fluorescence in a wide dynamic range: multiple images are captured while changing the amount of light to be received; the obtained multiple images are compared; and an image taken under the optimal exposure condition is selected for each region (see Patent Publication 1).

PRIOR ART PUBLICATION

PATENT PUBLICATION

Patent Publication 1: Japanese Patent No. 3834519

SUMMARY OF THE INVENTION

PROBLEMS TO BE SOLVED BY THE INVENTION

However, in the method described above in Patent Publication 1, multiple images are mechanically captured regardless of the types of specimen. Thus, even for a specimen that can be processed through dynamic range compensation of a single image, it is necessary to acquire images not to be used for detection. Accordingly, it is quite difficult to accelerate the detection process and reduce the volume of detection data.

The present invention was carried out to solve the aforementioned problems. Its objective is to provide a method for accelerating the detection process and reducing the volume of detection data; the method includes steps for capturing fluorescence images under predetermined imaging conditions; based on the fluorescence intensity of each region contained in the fluorescence images, it is determined when to finish the imaging process or when to set a subsequent condition for further imaging so as to acquire an image under the optimal condition for each region.

SOLUTIONS TO THE PROBLEMS

An embodiment of the present invention is a method for reading fluorescence images captured from a specimen having multiple regions that emit fluorescence. The method is characterized by the following steps:

    (a): setting a first imaging condition;
    (b): capturing a fluorescence image under the first imaging condition;
    (c): calculating a fluorescence intensity for each of multiple regions contained in the fluorescence image captured;

(d): determining whether or not to finish the imaging process based on the fluorescence intensity calculated for each region;

(e): when it is determined not to finish the imaging process in step (d), setting a subsequent imaging condition based on the fluorescence intensity calculated for each region in step (c);

(f): capturing a fluorescence image under the subsequent imaging condition; and

(g): repeating the steps (c)_(f) until it is determined in step (d) to finish the imaging process.

According to an embodiment of the present invention structured as above, based on the image captured under a predetermined imaging condition, subsequent imaging is performed. Accordingly, an image is efficiently captured, the detection process is accelerated and the volume of detection data is reduced.

In a preferred embodiment of the present invention, step (d) includes the following:

(d-1): determining whether the fluorescence intensity calculated in step (c) for each region is significant; and

(d-2): when the fluorescence intensity of a region is determined to be significant, employing the fluorescence intensity calculated in step (c) as the reading of the region.

Also, step (e) includes step (e-1): when a region is found to have insignificant fluorescence intensity, setting a subsequent imaging condition for the region so that less light is received than in the previous condition applied for the image used in determination step (d).

According to the embodiments of the present invention structured as above, by calculating the fluorescence intensity of a region each time an image is captured, and by determining each time whether it is necessary to take another image under a subsequent imaging condition, capturing images not necessary for detecting fluorescence is avoided, the detection process is accelerated and the volume of detection data is reduced.

In a preferred embodiment of the present invention, step (d) includes step (d-3): determining that imaging is finished when multiple regions in the image are each found to have significant fluorescence intensity in step (d-1).

According to the embodiments of the present invention structured as above, capturing images not necessary for detecting fluorescence is avoided, the detection process is accelerated and the volume of detection data is reduced.

Furthermore, in a preferred embodiment of the present invention, if a fluorescence intensity calculated in the calculation step is applied for a region in step (d-2), step (c) is omitted when step (g) is conducted.

According to the embodiments of the present invention structured as above, the detection process is accelerated and the volume of detection data is reduced.

Yet furthermore, in a preferred embodiment of the present invention, step (d) includes step (d-1): determining whether the fluorescence intensity calculated in step (c) for each region has a significant value or not;

(e) includes the following:

(e-2): for each region determined to have significant fluorescence intensity, selecting one or more imaging conditions that receive more light than in the previous condition;

(e-3): predicting a fluorescence intensity for each of the selected imaging conditions from the formula below;

$$\text{formula: predicted fluorescence intensity} = (\text{fluorescence intensity of region/base imaging condition}) \times \text{selected imaging condition}$$

(Here, the base imaging condition indicates the condition applied for capturing the fluorescence image used when calculating the fluorescence intensity in step (c))

(e-4): among fluorescence intensities predicted for each of the selected imaging conditions, determining a confirmed imaging condition for the region by choosing an imaging condition corresponding to the highest fluorescence intensity among predicted intensities with significant values;

(e-5): when no significant value is found in step (e-4) among the predicted fluorescence intensities calculated for the selected imaging conditions, setting a subsequent imaging condition for the region so that less light is received than in the condition applied for capturing the fluorescence image used when calculating the fluorescence intensity in step (c);

(e-6): for each region determined not to have significant fluorescence intensity, setting a subsequent imaging condition that receives less light than in the condition applied for capturing the fluorescence image used when calculating the fluorescence intensity in step (c);

(f) further includes:

(f-1): capturing a fluorescence image for each region under the confirmed condition set in step (e-4); and

(d) further includes:

(d-4): as the reading of each region, employing the fluorescence intensity of the image that is captured in step (f-1) and is calculated in step (c), and determining that the imaging process is finished in each region.

According to the embodiments of the present invention structured as above, an imaging condition is calculated for each region from the fluorescence image captured under the base imaging condition so that an optimal fluorescence intensity is obtained for each region, and a fluorescence intensity is read from the image captured under such an imaging condition. As a result, numerical readings representing fluorescence intensities in significant values and in a wide dynamic range are obtained. Furthermore, acquiring images not necessary for detecting fluorescence is avoided, the detection process is accelerated and the volume of detection data is reduced.

In addition, in a preferred embodiment of the present invention, step (e-5) is replaced with step (e-5'): when no fluorescence intensity is found to have a significant value among fluorescence intensities predicted for selected imaging conditions in step (e-4), using the previous imaging condition as its confirmed imaging condition.

According to the embodiments of the present invention structured as above, the detection process is accelerated.

Moreover, in a preferred embodiment of the present invention, when the previous imaging condition is set as the confirmed imaging condition for a region in step (e-5'), the fluorescence intensity calculated in step (c) is employed as the reading of the region, and step (f-1) is omitted.

According to the embodiments of the present invention structured as above, the detection process is accelerated.

Yet furthermore, in a preferred embodiment of the present invention, three or more imaging conditions are prepared in advance, and the first imaging condition will be a median one among three or more conditions set in the order of amounts of light to be received.

According to the embodiments of the present invention structured as above, the detection process is accelerated.

Yet furthermore, in a preferred embodiment of the present invention, when imaging conditions are each set to receive less light than in the imaging condition applied for capturing the fluorescence image used when calculating fluorescence intensities in step (c), and when such conditions are arranged in the order of amounts of light to be received, then a median imaging condition is employed as the subsequent imaging condition for steps (e-5) and (e-6).

According to the embodiments of the present invention structured as above, the detection process is accelerated.

Yet furthermore, in a preferred embodiment of the present invention, to determine whether or not fluorescence intensity is significant in step (d-1), if the fluorescence intensity is not saturated and is greater than background fluorescence, the fluorescence intensity is determined to be significant.

Since the method according to an embodiment of the present invention is capable of reading fluorescence intensities having significant values, image readings are appropriately conducted.

Yet furthermore, in a preferred embodiment of the present invention, multiple imaging conditions are prepared in advance in such a way that no gap will result among fluorescence intensities that are respectively read under the multiple conditions arranged in the order of the amounts of light to be received.

According to the embodiments of the present invention structured as above, since readable fluorescence intensities are in continuous values, image readings are appropriately conducted for various specimens.

Yet furthermore, in a preferred embodiment of the present invention, imaging conditions are prepared in advance in such a way that no gap will result among fluorescence intensities that are read under their respective conditions even after background subtraction.

According to the embodiments of the present invention structured as above, since readable fluorescence intensities are in continuous values even after background subtraction, image readings are appropriately conducted for various specimens.

Yet furthermore, in a preferred embodiment of the present invention, when a subsequent imaging condition is unable to be set in step (e), it is determined that no further imaging be conducted in step (f) after step (e), and that imaging in step (d) be finished.

According to the embodiments of the present invention structured as above, it is determined that imaging is finished with appropriate timing when an optimal imaging condition is unable to be set for a certain specimen.

In the embodiments of the present invention, specimens are preferred to be biochips.

According to the embodiments of the present invention structured as above, an image reading method that accelerates the detection process and reduces the volume of detection data is available for use on biochips.

EFFECTS OF THE INVENTION

According to the embodiments of the present invention, an image reading method is provided. In such a method, a fluorescence image is captured under a predetermined imaging condition, and based on the fluorescence intensity of each region contained in the fluorescence image, it is determined whether imaging is finished or whether a subsequent imaging condition should be set. Accordingly, an optimal imaging condition is set for each region, the detection process is accelerated and the volume of detection data is reduced.

BRIEF DESCRIPTION OF THE DRAWINGS

FIG. 1 is a view showing an example of a fluorescence image of a biochip;
FIG. 2 is a graph showing relationships between exposure time and fluorescence intensities of a specimen;
FIG. 3 is an enlarged view showing a fluorescence image of a region;
FIG. 4 is an enlarged view showing a fluorescence image of a region with a luminescent spot;
FIG. 5 is a flowchart showing procedures in an image reading method according to a first embodiment of the present invention; and
FIG. 6 is a flowchart showing procedures in an image reading method according to a second embodiment of the present invention.

DETAILED DESCRIPTION OF THE EMBODIMENTS

First, terms used in the present application are described.

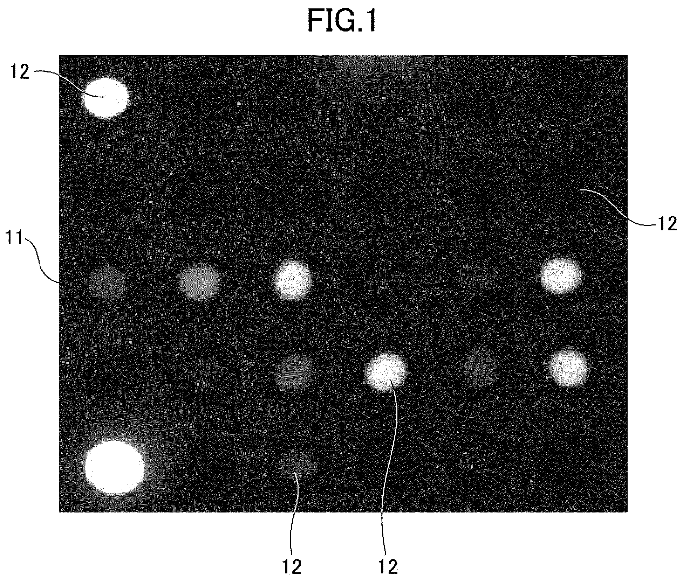

A fluorescence image of a biochip as shown in FIG. 1 corresponds to a specimen where multiple regions emit fluorescence, that is, an example of "a specimen where multiple regions are observed to emit fluorescence in different intensities." In biochip **11,** multiple regions **12** to emit fluorescence are arranged two-dimensionally, and the fluorescence emitted from each region varies in intensity from weak to strong. The size and shape of each region and the number and pitch of regions are not limited specifically.

As for a "biochip," numerous probes are independently immobilized on a carrier to make a high-density array. A biochip is not limited to a specific type as long as probes (such as oligonucleotide probes) are immobilized on a carrier.

The type of biochip is not limited specifically, either; for example, a biochip shaped as a plate, rod, beads or the like may be used. When a planar carrier is used, predetermined probes may be immobilized by group at predetermined intervals on the plate (refer to a spotting method or the like; refer to Science 270, 467-470 (1995), etc.) Also, predetermined probes may be synthesized successively by group on certain spots of the plate (refer to photolithographic approach or the like: see Science 251, 767-773 (1991), etc.).

As another preferred type of carrier, hollow fibers may be used. A biochip is prepared using hollow fibers as follows: oligonucleotide probes are immobilized by group in hollow fibers, all hollow fibers are bundled and immobilized, and the fiber bundle is cut repeatedly in a longitudinal direction. Such a biochip is defined as a substrate where oligonucleotide probes are immobilized in through holes (refer to Japanese Patent No. 3510882 or the like; see FIG. 1).

Immobilizing probes on a carrier is not limited to a specific method, and any biding mode may be employed. Probes do not have to be directly immobilized on a carrier. For example, it is an option to coat a carrier in advance by using a polymer such as polylysine and to immobilize probes on the carrier after such coating treatment. Moreover, when a tubular body such as a hollow fiber bundle is used as a carrier, a gelated material may be placed first in the tubular body, and then probes are immobilized in the gelated material.

A "fluorescence image" is obtained by irradiating on a specimen excitation light from an excitation-light source and by capturing fluorescence emitted from the specimen by using an imaging device. Examples of an excitation-light source are lasers, mercury lamps, LED and the like, and any light source may be used as long as the wavelength of light is capable of exciting the fluorescence to be observed. An imaging device is not limited to a specific type; examples are CCD cameras, CMOS sensors, PMT and the like.

An "imaging condition" indicates the degree of light to be received by an imaging device to capture the fluorescence intensity of a specimen. To modify the amount of light to be received, the intensity of excitation light may be changed when irradiating on a specimen, or the setting in an imaging device may be changed. To change the irradiation intensity, the output of an excitation-light source may be changed directly, or an ND filter or the like may be inserted along the route of excitation light so that the irradiation intensity on a specimen is changed. To change the setting of an imaging device, the amount of light to be received in a CCD camera may be modified by changing the exposure time or by increasing the gain when capturing images. Because excitation-light sources and imaging devices have their respective properties, various settings of conditions are preferred to be tested in advance on the same specimen so as to calculate from the obtained fluorescence intensities how the amounts of light to be received are related to conditions.

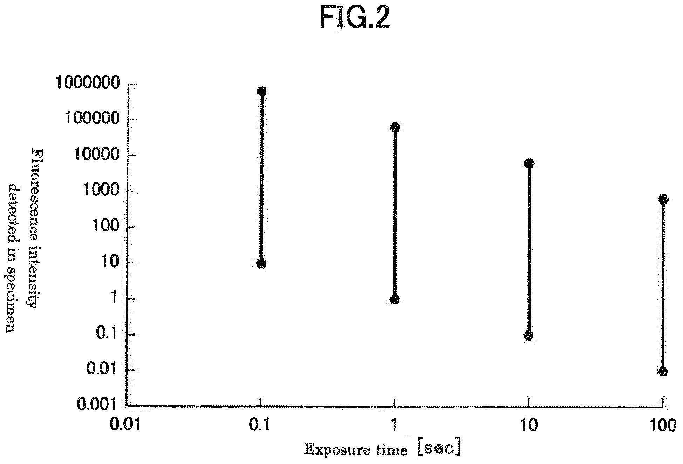

For example, when a 16-bit CCD camera is used as an imaging device, fluorescence intensities of a specimen are seen to have relationships between exposure time and amounts of light to be received as shown in FIG. 2. When fluorescence intensities, which a CCD camera is capable of capturing from a specimen, are each converted to a value per 1 second of exposure time, brightness intensities at respective exposure settings are: 1~65535 at 1 second, 10~655350 at 0.1 second, 0.1-6553.5 at 10 seconds, and 0.01-655.35 at 100 seconds. Such multiple settings are prepared in advance. To select imaging conditions, fluorescence intensities each converted to a value per 1 second of exposure time are preferred to overlap when multiple imaging conditions are set according to the amounts of light to be received (in ascending or descending order). Namely, it is preferred to set imaging conditions in such a way that fluorescence intensities that can be read under the conditions will show no value gaps after conversion. Also, imaging conditions are preferred to be set in advance so that even after background subtraction from the images, no gap will result in fluorescence intensities that can be read under the conditions.

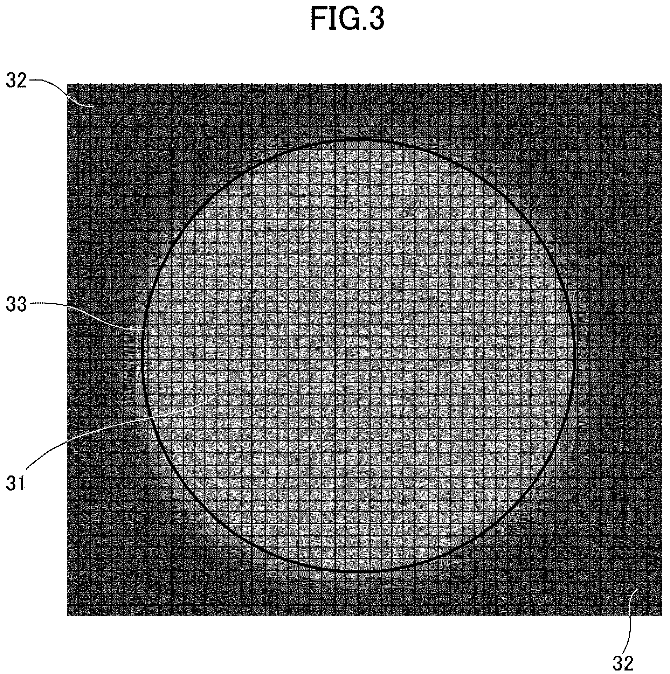

FIG. 3 is an enlarged view of a fluorescence image of a predetermined region of a specimen, for example. Region **31** is structured with pixels **32** that are arranged two-dimensionally.

"To calculate the fluorescence intensity of a region" means to obtain information on the fluorescence intensity value of region **31** based on the fluorescence intensity of each pixel **32** located inside boundary **33** of region; more specifically, to calculate statistical values to represent the region such as mean, median, minimum, maximum, standard deviation, and CV (coefficient of variation) from the fluorescence intensities of all pixels **32** located inside boundary **33** of the region. The image to be used for calculation may be the image directly after capture, the image after imaging correction such as background correction (background subtraction) and shading correction, or the like, and may be selected appropriately by a user.

In the embodiments below, "fluorescence intensity is significant" means the fluorescence intensity of a specimen captured under a certain imaging condition is not saturated. The term "saturation" is defined later. Conversely, when fluorescence intensity is saturated or is less than the background fluorescence, the obtained fluorescence intensity value is determined not to have any meaningful value, and is determined not to be significant. Alternatively, when fluorescence intensity is not saturated and is greater than the background fluorescence, such intensity may be defined as that having a significant value.

When a 16-bit CCD camera is used, 65535 - the upper limit of readable value-corresponds to "saturation." However, since fluorescence intensities fluctuate depending on external factors such as noise of the device, the user may select a value, for example, 60000 or greater, to set as the saturation level. If saturation has occurred even on one pixel in the region, a correct fluorescence intensity is not obtained when an average value is employed. However, if a median value is employed, a meaningful value can be obtained unless the total number of pixels that are saturated or luminescent and pixels that are affected by those pixels exceeds 50% of all the pixels. Thus, rather than a mean value, a median value is preferable as the value to represent a region. As for the number of pixels used as the basis to determine whether the fluorescence intensity of the region is saturated, any applicable number may be selected by the user.

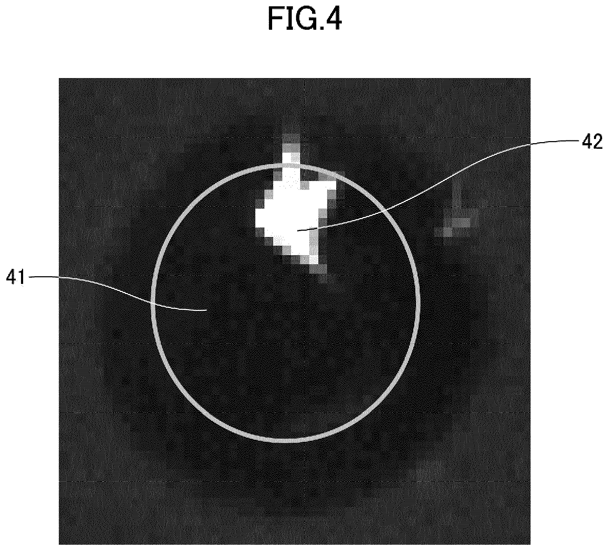

FIG. 4 is an enlarged view of a fluorescence image of a region different from the one shown in FIG 3. When a foreign substance is present in region **41,** the foreign substance is excited and emits fluorescence, which is then captured as luminescent spot **42.** In such a situation, the correct fluorescence intensity of the region cannot be calculated; to calculate the fluorescence intensity of the region, another fluorescence image needs to be captured under an imaging condition that receives less light. Here, a known method for removing a luminescent spot (Japanese Patent No. 4979516) is applied on fluorescence intensities of all the pixels in the region, and then the fluorescence intensity of the region excluding the luminescent spot is calculated.

To conduct the above process, first, all the pixels in region **41** are arranged in ascending order, and a median value, a first quartile and a third quartile are each obtained. Then, a threshold value to be determined as a luminescent spot is calculated as follows.

$$\text{threshold value} = \text{median value} + (\text{third quartile} - \text{first quartile}) \times \alpha \cdots \text{formula 1}$$

($\alpha$: sensitivity for removing luminescent spot)

The fluorescence intensity of each pixel in region **41** is compared with the threshold value, and a pixel having the threshold value or greater is determined to be a luminescent spot and is excluded from the pixels in region **41.** Then, the saturation status of remaining pixels is checked, and the fluorescence intensity of the region is calculated if there is no saturation.

When the fluorescence intensity of a region is calculated after imaging correction such as background correction and shading correction is conducted, a luminescent spot removal process may be conducted in combination with such correction process. A luminescent spot removal process is conducted on a corrected image obtained by performing a predetermined image correction on an uncorrected image, namely, on an image directly after it is captured. Next, the pixels determined to be luminescent spots are stored in the memory, and the pixels stored in the memory are removed as luminous spots from the uncorrected fluorescence image. Then, it is determined whether the remaining pixels are saturated or not. When the pixels are determined not to be saturated, the fluorescence intensity of the region is calculated after the luminescent spots are removed from the corrected image.

"To employ or not to employ" means as follows: it is determined whether there is a saturated pixel in a region; when a saturated pixel is present, the reading under the current imaging condition will not be employed (not to employ); and when there is no saturated pixel found in the region, the calculated fluorescence intensity will be employed as the resultant reading of the region (to employ). To compare fluorescence intensities calculated from multiple imaging conditions, multiple conditions are converted into those under the same condition by using a relational formula between an imaging condition and the amount of light to be received. The results converted into the same condition may be outputted when all the regions are determined to be employed, or may be outputted each time a region is determined to be employed or not to be employed.

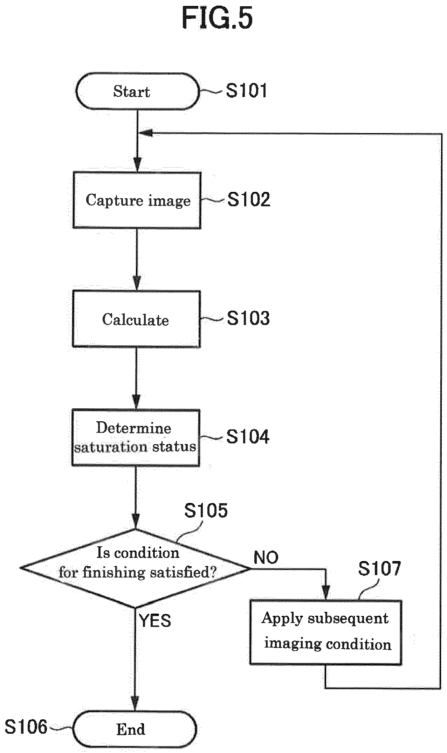

Next, the image reading method according to a first embodiment of the present invention is described with reference to the flowchart in FIG 5. To execute the image reading method of the present embodiment, a fluorescence image to be read is the one acquired by using a known imaging device, such as described in Japanese Patent No. 3834519. Until fluorescence intensities are actually detected, the fluorescence intensity emitted from each region of a specimen is unknown. However, for the sake of convenience, a specimen with assumed values as shown below is used.

Conditions of Specimen

- number of regions emitting fluorescence: four
- fluorescence intensity corresponding to a value per 1.0 second of exposure time captured by using an imaging device (16-bit CCD camera): region A: 100, region B: 2000, region C: 20000, region D: 100000

In the present embodiment, a starting procedure is conducted prior to a series of procedures; multiple imaging conditions set in advance to receive different amounts of light are arranged in descending order of the amounts of light to be received (step S101). In the present embodiment, multiple imaging conditions are set to receive different amounts of light, that is, an imaging device (16-bit CCD camera) is set in four different exposure times: 0.1 second, 1.0 second, 4.0 seconds, and 40.0 seconds. When conditions of the present embodiment are arranged in descending order of amounts of light to be received, arranged conditions are: a: 40.0 seconds, b: 4.0 seconds, c: 1.0 second, and d: 0.1 second. As for the relationship of settings in an imaging device and amounts of light to be received, exposure time and the amount of light to be received are generally known to be proportional in a CCD camera. When fluorescence intensity obtained under an exposure time is divided by the exposure time, each fluorescence intensity is converted to a value per 1 second of exposure time. Accordingly, based on the fluorescence intensities converted as above, fluorescence intensities can be compared with each other.

Next, an image capturing step is conducted to capture a fluorescence image under the first imaging condition among the above imaging conditions (step S102). In the present embodiment, a fluorescence image is captured by irradiating excitation light on the specimen at an exposure time of 40.0 seconds, which is the first imaging condition. Since fluorescence material is known to fade if excitation light is kept irradiated, it is preferred to block excitation light with a shutter or the like so as to prevent irradiation on the specimen except when capturing a fluorescence image. In the present embodiment, multiple imaging conditions are prepared in advance and arranged in descending order of the amounts of light to be received, and a fluorescence image is captured under the first imaging condition. However, other than preparing multiple imaging conditions arranged according to the amounts of light to be received, a predetermined imaging condition may be set for an initial setting as the basis to be used when repeating procedures as described later.

Next, regarding multiple regions contained in the fluorescence image captured in the above step, a calculation step is conducted to obtain the fluorescence intensity of each region (step S103). In the present embodiment, the fluorescence intensity of each region is calculated by using known technologies; it is easy to calculate by using generally employed image analysis software. Here, actual fluorescence intensities are: region A: 4000, region B: 80000, region C: 800000, and region D: 4000000. However, since a 16-bit CCD camera is used, calculated fluorescence intensities for regions B‗D are each 65535.

Next, a saturation determination step is conducted as follows: the fluorescence intensity of each region calculated in the calculation step is determined to be saturated or not; when a region is determined not to be saturated, the fluorescence intensity calculated in the calculation step is employed as the reading of the region (step S104). In the present embodiment, whether or not a fluorescence intensity has a significant value is determined by whether or not the fluorescence intensity is saturated. If a fluorescence intensity is not saturated, that means the value is significant, and if a fluorescence intensity is saturated, that means the value is insignificant. When a fluorescence intensity exceeding 65000 in one or more pixels is set as an index for determining if the fluorescence intensity of a region is saturated (namely, the value of fluorescence intensity is not significant), since regions B~D are saturated in the present embodiment, it is determined not to employ their fluorescence intensities obtained under the first imaging condition. On the other hand, since region A is not saturated, its fluorescence intensity has a significant value, and thus the fluorescence intensity captured in the current exposure setting is determined to be employed.

Next, on the fluorescence image after the above saturation determination step, a finish determination step is conducted to determine whether the image satisfies the condition of finishing the image reading (step S105). An example of the condition of finishing the image reading is, for example, when no region is found to have saturated fluorescence intensity in the multiple regions contained in the fluorescence image (namely, when the fluorescence intensity in all the region has a significant value). In the present embodiment, when no region is found to have saturated fluorescence intensity in regions A~D, namely, when regions A~D are not saturated, and all the fluorescence intensities are determined to be employed, image reading will be finished (Yes, in step S105, and proceed to step S106).

When there is a region with saturated fluorescence intensity (namely, when a region has insignificant fluorescence intensity) in the finish determination step, procedures in the present embodiment will continue (No, in step S105). When the fluorescence intensity of a region is determined to be saturated, the imaging condition applied in step S102 is thought to be inadequate. Thus, another imaging condition is applied for the region so as to receive less light than the previous condition applied in step S102(step S107). In the present embodiment, since three regions B~D are determined to be saturated in the saturation determination step S104, the subsequent imaging condition that receives less light, namely, the second imaging condition b: 4.0 seconds, is set as the exposure time.

Next, excitation light is irradiated on the specimen, and another fluorescence image is captured under a new imaging condition (going back from step S107 to step S102). In the present embodiment, a fluorescence image is captured in exposure time of the second imaging condition b: 4.0 seconds. Then, the aforementioned calculation step (S103), saturation determination step (S104) and finish determination step (S105) are repeated.

In the present embodiment, when a fluorescence image is captured in exposure time of the second imaging condition b: 4.0 seconds, fluorescence intensities are calculated only for three regions B~D in the calculation step (S103). Since a fluorescence intensity is already obtained for region A, the calculation step and subsequent steps are omitted in region A so that high-speed and efficient processing can be conducted. Here, when a calculation step is conducted, actual fluorescence intensities of region B~D are: region B: 8000, region C: 80000, and region D: 400000. However, since a 16-bit CCD camera is used, calculated fluorescence intensities for regions C~D are each 65535.

In the present embodiment, the saturation determination step is further conducted on fluorescence intensities calculated from the fluorescence image captured under the second imaging condition. As described above, since fluorescence intensities are saturated in regions C~D under the second imaging condition as well, fluorescence intensities obtained under the second imaging condition are determined not to be employed. On the other hand, since the fluorescence intensity is not saturated in region B, the fluorescence intensity obtained under the second imaging condition is determined to be employed. In the following, the aforementioned procedures are continued, and imaging conditions are changed until no further region is found to have saturated fluorescence intensity. Then, the image reading process is finished.

Results of the present embodiment, namely, an imaging condition (exposure time) that was applied in a region, a fluorescence intensity obtained at that exposure time, and the fluorescence intensity converted to a value per 1 second of exposure time, are shown in Table 1.

| | applied exposure time [sec.] | fluorescence intensity in applied exposure time | fluorescence intensity converted to that per 1 sec. of exposure time |
|---|---|---|---|
| Region A | 40 | 4000 | 100 |
| Region B | 4 | 8000 | 2000 |
| Region C | 1 | 20000 | 20000 |
| Region D | 0.1 | 10000 | 100000 |

As shown above, according to an embodiment of the present invention, the fluorescence intensity of a region is calculated each time a fluorescence image is captured so that acquiring images not to be used for fluorescence detection is avoided, the detection process is accelerated and the volume of detection data is reduced.

In the image reading method of the present embodiment, when none of the regions is determined to have a saturated fluorescence intensity (namely, when all the region has significant fluorescence intensity), the reading of fluorescence images is finished. When a region is found to have a saturated fluorescence intensity even under a condition of receiving the least amount of light, such a result (fluorescence intensity of the region is saturated, and thus a correct fluorescence intensity is not obtained) is outputted to a user. In such a situation, as the condition of finishing the image reading, "no further imaging condition is available" is added to "no region is found to have saturated fluorescence intensity."

According to the first embodiment above, the condition of finishing the image reading is when no region is found to have saturated fluorescence intensity. Other conditions may be, for example, when the area of a region determined to have saturated fluorescence intensity goes under a certain proportion relative to the area of all the regions.

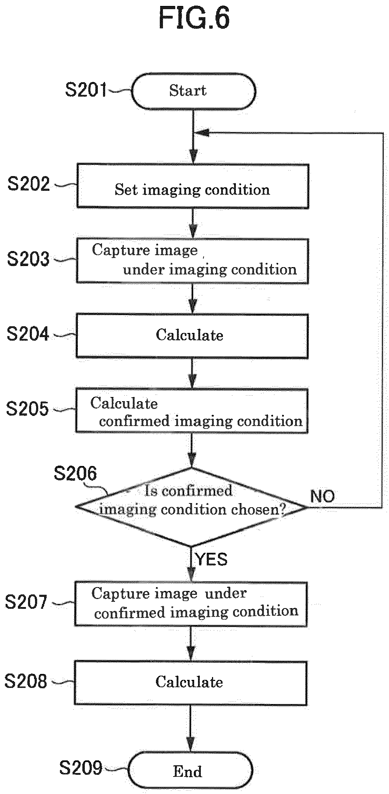

Next, the image reading method according to a second embodiment of the present invention is described with reference to the flowchart in FIG. 6. The same as in the first embodiment, to execute the image reading method of the present embodiment, a fluorescence image to be read is one acquired by using a known imaging device, such as described in Japanese Patent No. 3834519. Until fluorescence intensities are actually detected, the fluorescence intensity emitted from each region of a specimen is unknown. However, for the sake of convenience, a specimen with assumed values as shown below is used.

Conditions of Specimen

- number of regions emitting fluorescence: five
- fluorescence intensity corresponding to a value of 1.0 second per exposure time captured by using an imaging device (16-bit CCD camera): region A: 500, region B: 2000, region C: 20000, region D: 100000, region E: 1000000

In the description of the present embodiment, "base imaging condition" means an imaging condition used as a basis to determine a confirmed imaging condition, which is the optimal imaging condition for each region, and means the condition for capturing a fluorescence image used when calculating fluorescence intensity in step S204. In later-described step S202, a first imaging condition is set, which corresponds to the first base imaging condition. Then, when no further confirmed imaging condition is determined for a region, another imaging condition is set, which becomes the next base imaging condition.

In the description of the present embodiment, "predicted fluorescence intensity" means a fluorescence intensity predicted in an image captured under another imaging condition, based on the fluorescence intensity of a region calculated from the fluorescence image captured under the previous condition set as the base imaging condition. As described above, when a CCD camera is used, the amount of light to be received is in proportion to exposure time. When the base imaging condition is set to have exposure time of 10 seconds, and if the fluorescence intensity of a region is 1000, the fluorescence intensity of the region is predicted to be approximately 2000 under another imaging condition with exposure time of 20 seconds.

In the present embodiment, three or more imaging conditions with different amounts of light to be received are prepared in advance, more specifically, seven different imaging conditions are prepared as described below. In the present embodiment, prior to starting a series of procedures, multiple imaging conditions with different amounts of light to be received are arranged in ascending order of the amounts of light to be received (step S201). Multiple imaging conditions are set by changing the amount of light to be received in the present embodiment; exposure time for the imaging device (16-bit CCD camera) is in seven settings - 0.01 second, 0.1 second, 1.0 second, 4.0 seconds, 40.0 seconds, 100.0 seconds, and 400.0 seconds. In the present embodiment, conditions arranged in ascending order of amounts of light to be received are as follows: a: 0.01 second, b: 0.1 second, c: 1.0 second, d: 4.0 seconds, e: 40.0 seconds, f: 100.0 seconds, and g: 400.0 seconds. As for the relationship between settings in an imaging device and amounts of light to be received, exposure time and the amount of light to be received are generally known to be proportional in a CCD camera. When fluorescence intensity obtained during an exposure time is divided by the exposure time, the fluorescence intensity is converted to a value per 1 second of exposure time. Accordingly, based on the fluorescence intensities converted as above, fluorescence intensities can be compared with each other. In the present embodiment, the amounts of light to be received are arranged in ascending order, but they may also be arranged in descending order. Namely, either in ascending or descending order, it is sufficient as long as imaging conditions are arranged according to the amounts of light to be received.

Next, an imaging condition (first imaging condition to be set as a base imaging condition) is set (step S202). In the present embodiment, following step S201, the median value among imaging conditions described above, namely, the fourth imaging condition "d" is set as the first imaging condition to be used as the basis. In the present embodiment, since the number of imaging conditions set in advance was an odd number, the fourth imaging condition, which is the median, was set as the first imaging condition. When the number of imaging conditions set in advance is an even number, either of two conditions arranged near the center is used as the first imaging condition. Namely, when multiple imaging conditions are arranged according to the amounts of light to be received, a condition arranged near the center is employed as the first imaging condition.

Next, a fluorescence image is captured under the selected imaging condition (first imaging condition set as the base imaging condition in the flow of steps S201 to S202) (step S203). Excitation light is irradiated on a specimen with an exposure time of 4.0 seconds to capture a fluorescence image. Since fluorescence material is known to fade if excitation light is kept irradiated, it is preferred to block excitation light by using a shutter or the like so as to prevent irradiation on the specimen except when capturing a fluorescence image.

Regarding multiple regions contained in the fluorescence image captured in the above step (step S203), a calculation step is conducted to calculate the fluorescence intensity of each region (step S204). In the present embodiment, the fluorescence intensity of each region is calculated by using known technologies; it is easy to calculate by using generally employed image analysis software. Here, actual fluorescence intensities are: region A: 2000, region B: 8000, region C: 80000, region D: 400000 and region E: 4000000. However, since a 16-bit CCD camera is used, calculated fluorescence intensities for regions C~E are each 65535. The image used to calculate fluorescence intensities in the calculation step (step S204) is the one captured in the imaging step (step S203), and the imaging condition in the imaging step (step S203) is what was set in step S202 and is the base imaging condition.

Next, a step for calculating a confirmed imaging condition is conducted (step S205). First, it is determined whether or not the fluorescence intensity of each region calculated from the above imaging condition is saturated (namely, whether or not the fluorescence intensity has a significant value). When a fluorescence intensity exceeding 65000 in one or more pixels is set as an index in the present embodiment for determining if the fluorescence intensity of a region is saturated, regions A and B are determined not to be saturated (that is, fluorescence intensity has a significant value), whereas regions C~E are determined to be saturated (that is, fluorescence intensity has an insignificant value).

Next, imaging conditions that receive more light than in the base imaging condition (the condition for the image captured in step S203) are selected. In the present embodiment, four imaging conditions "d~g" are selected.

Then, fluorescence intensities are predicted; more specifically, fluorescence intensities are predicted for regions A and B, which are not saturated as described above and in which above selected imaging conditions "d~g" are applied.

predicted fluorescence intensity=(fluorescence intensity of region / base imaging condition) × selected imaging condition ⋯⋯ formula 2

Predicted fluorescence intensities calculated using the above formula 2 are shown in Table 2.

Table 2

| | base imaging condition | selected imaging conditions | | | |
|---|---|---|---|---|---|
| | 4.0 sec. | d: 4.0 sec. | e: 40.0 sec. | f: 100.0 sec. | g: 400.0 sec. |
| Region A | 2000 | 2000 | 20000 | 50000 | 200000 |
| Region B | 8000 | 8000 | 80000 | 200000 | |

Next, a confirmed imaging condition is determined for each region. When the highest predicted fluorescence intensity without saturation is chosen for each region from among the predicted fluorescence intensities in Table 2, the confirmed imaging conditions are: imaging condition f: 100.0 seconds for region A, and imaging condition d: 4.0 seconds for region B.

Next, it is determined whether the confirmed imaging condition is chosen for each of all regions step S206. So far, since no confirmed imaging condition is determined for regions C~E (No, in step S206), the same calculation is conducted on regions C~E starting from selection of the subsequent imaging conditions (step S202).

The subsequent imaging condition is selected to be different from the above first imaging condition. Since imaging conditions "d~g" are already used for selecting confirmed imaging conditions in the above steps, subsequent conditions are selected from the remaining conditions "a~c." The same as in the method described above regarding step (S202), when the remaining imaging conditions that receive less light than the base imaging condition are arranged according to the amounts of light to be received, the condition positioned near the median among three conditions is selected as the subsequent imaging condition. Here, condition b: 0.1 second is selected as the subsequent condition, which is used as the basis to determine confirmed imaging conditions for regions C~E.

In the following, based on the subsequent imaging condition b: 0.1 second, steps S203~S205 are conducted the same as above. Accordingly, condition "c" is set as the confirmed imaging condition for region C, and condition "b" for region D. Regarding region E, since no confirmed imaging condition is determined, the process returns to step S202, condition "a" is selected as the subsequent imaging condition, and steps S203~S205 are repeated the same as above. Accordingly, the confirmed imaging condition for each region is set as follows: condition "e" for region A, condition "d" for region B, condition "c" for region C, condition "b" for region D, and condition "a" for region E.

When no region is found to be saturated during procedures to choose confirmed imaging conditions, it is determined that each of the regions has a confirmed imaging condition, and the series of selecting confirmed imaging conditions is finished (Yes, in step S206). In addition, if fluorescence intensity is found to be saturated even under an imaging condition with the least receiving light, such a result is outputted to notify the user that the fluorescence intensity of the region is saturated and no correct fluorescence intensity can be calculated.

Table 3

|  | base imaging condition | selected imagine condition |
|---|---|---|
|  | 0.1 sec. | c: 1.0 sec. |
| Region C | 2000 | 20000 |
| Region D | 10000 | 100000 |
| Region E | 100000 | 1000000 |

Table 4

|  | base imaging condition |
|---|---|
|  | 0.01 sec. |
| Region E | 10000 |

Next, images are captured under confirmed imaging conditions (step S207). After each image is captured, only the fluorescence intensity of a region under the corresponding imaging condition is calculated, and is read (step S208), and a series of procedures will be finished (step S209).

Results of the present embodiment, namely, a confirmed imaging condition (exposure time) that was applied in a region, the fluorescence intensity obtained during the exposure time, and the fluorescence intensity converted to a value per 1 second of exposure time, are shown in Table 5.

Table 5

|  | confirmed imaging condition (exposure time) [sec.] | fluorescence intensity under confirmed imaging condition | fluorescence intensity converted to that per 1 sec. of exposure time |
|---|---|---|---|
| Region A | 100.0 | 50000 | 500 |
| Region B | 4.0 | 8000 | 2000 |
| Region C | 1.0 | 20000 | 20000 |
| Region D | 0.1 | 10000 | 100000 |
| Region E | 0.01 | 10000 | 1000000 |

As described above, according to the present embodiment, numerical conversion with significant values and in a wider dynamic range are obtained by calculating an imaging condition for each region from the fluorescence image captured under the base imaging condition so as to obtain the optimal imaging condition for capturing fluorescence intensity of the region, and by reading fluorescence intensity from the image captured under the selected imaging condition. Moreover, acquiring images not necessary for fluorescence detection is avoided, the detection process is accelerated and the volume of detection data is reduced.

In the present embodiment, when choosing a confirmed imaging condition for a region where the fluorescence intensity is not saturated, imaging conditions that receive more light than in the base imaging condition are selected, and then a confirmed imaging condition is calculated from such conditions. As described above, when no significant value is found among fluorescence intensities predicted for the selected imaging conditions, a new base imaging condition is set and the procedures are repeated. When the same procedures as above are conducted based on the new base condition, the final result for the confirmed imaging condition will be the previous base imaging condition. Therefore, instead of applying a subsequent base condition in the present embodiment, when no significant value is found among the fluorescence intensities predicted when the imaging conditions are selected for a region where fluorescence intensity is not saturated, a base imaging condition used currently for calculating values may be chosen as the confirmed imaging condition for the region. By so setting, the calculation is conducted more efficiently.

In the present embodiment, after a confirmed imaging condition is set for each region, a fluorescence image is obtained under the confirmed imaging condition (step S207), and then, after images are captured, only the fluorescence intensity under the corresponding imaging condition is calculated for each region (step S208). On the other hand, as described above, instead of setting a new base imaging condition for a region, it is an option to assume that an image has been already captured under the confirmed imaging condition in an embodiment where the base imaging condition currently used for calculation is set as the confirmed imaging condition for the region. Accordingly, to shorten imaging time, imaging or the like under a confirmed imaging condition is omitted, and the fluorescence intensity captured under an imaging condition set as the base condition and calculated in the calculation step S204 may be set as the reading of the region.

In the embodiment above, a confirmed imaging condition is selected for each of all the regions. Alternatively, when the area of a region without a confirmed imaging condition goes under a certain proportion relative to the area of all the regions, no further process is conducted to select a subsequent confirmed imaging condition, and imaging is performed based on the current confirmed imaging condition to obtain the reading of the region.

**Claims**

1. A method for reading a fluorescence image captured from a specimen having a plurality of regions that emit fluorescence, comprising:

   (a): setting a first imaging condition;
   (b): capturing a fluorescence image under the first imaging condition;
   (c): calculating a fluorescence intensity for each of a plurality of regions contained in the fluorescence image;
   (d): determining whether or not to finish an imaging process based on the fluorescence intensity calculated for each region;
   (e): when it is determined not to finish the imaging process in step (d), setting a subsequent imaging condition based on the fluorescence intensity calculated for each region in step (c);
   (f): capturing a fluorescence image under the subsequent imaging condition; and
   (g): repeating the steps (c)~(f) until it is determined in step (d) to finish the imaging process.

2. The image reading method according to Claim 1, wherein step (d) comprises:

   (d-1): determining whether the fluorescence intensity calculated in step (c) for each region is significant or not; and
   (d-2): when the fluorescence intensity of a region is determined to be significant, employing the fluorescence intensity calculated in step (c) as the reading of the region, and

   step (e) comprises

   (e-1): when a region is found to have insignificant fluorescence intensity, setting a subsequent imaging condition for the region so that less light is received than in the previous condition applied for the image used in determination of step (d).

3. The image reading method according to Claim 2, wherein step (d) comprises (d-3): determining that imaging is finished when the plurality of regions in the image are each found to have significant fluorescence intensity in step (d-1).

4. The image reading method according to Claim 2 or 3, wherein if a fluorescence intensity calculated in the calculation step is applied for a region in step (d-2), step (c) is omitted when step (g) is conducted.

5. The image reading method according to Claim 1, wherein step (d) comprises:

   (d-1): determining whether the fluorescence intensity calculated in step (c) for each region has a significant value or not;

(e) comprises:

(e-2): for each region determined to have significant fluorescence intensity, selecting one or more imaging conditions that receive more light than in the previous condition;

(e-3): predicting a fluorescence intensity for each of the selected imaging conditions from the formula below;

$$\text{formula: predicted fluorescence intensity}=(\text{fluorescence intensity of region/base imaging condition})\times\text{selected imaging condition}$$

(here, the base imaging condition indicates the condition applied for capturing the fluorescence image used when calculating the fluorescence intensity in step (c))

(e-4): among fluorescence intensities predicted for each of the selected imaging conditions, determining a confirmed imaging condition for the region by choosing an imaging condition corresponding to the highest fluorescence intensity among predicted intensities with significant values;

(e-5): when no significant value is found in step (e-4) among the predicted fluorescence intensities calculated for the selected imaging conditions, setting a subsequent imaging condition for the region so that less light is received than in the condition applied for capturing the fluorescence image used when calculating the fluorescence intensity in step (c);

(e-6): for each region determined not to have significant fluorescence intensity, setting a subsequent imaging condition that receives less light than in the condition applied for capturing the fluorescence image used when calculating the fluorescence intensity in step (c);

step (f) further comprises:

(f-1): capturing a fluorescence image for each region under the confirmed condition set in step (e-4); and

step (d) further comprises:

(d-4): as the reading of each region, employing the fluorescence intensity of the image that is captured in step (f-1) and is calculated in step (c), and determining that the imaging process is finished in each region.

6. The image reading method according to Claim 5, wherein step (e-5) is replaced with step (e-5'): when no fluorescence intensity is found to have a significant value among fluorescence intensities predicted for selected imaging conditions in step (e-4), using the base imaging condition as its confirmed imaging condition.

7. The image reading method according to Claim 6, wherein when the base imaging condition is set as the confirmed imaging condition for a region in step (e-5'), the fluorescence intensity calculated in step (c) is employed as the reading of the region, and step (f-1) is omitted.

8. The image reading method according to any of Claims 5~7, wherein three or more imaging conditions are prepared in advance, and the first imaging condition will be a median one among three or more conditions set in the order of amounts of light to be received.

9. The image reading method according to Claim 8, wherein when imaging conditions are each set to receive less light than in the imaging condition applied for capturing the fluorescence image used when calculating fluorescence intensities in step (c), and when such conditions arc arranged in the order of amounts of light to be received, then a median imaging condition is employed as the subsequent imaging condition for steps (e-5) and (e-6).

10. The image reading method according to any of Claims 2~9, wherein to determine whether or not fluorescence intensity is significant in step (d-1), if the fluorescence intensity is not saturated and is greater than background fluorescence, the fluorescence intensity is determined to be significant.

11. The image reading method according to any of Claims 1~10, wherein a plurality of imaging conditions are prepared in advance in such a way that no gap will result among fluorescence intensities that are read respectively under the plurality of imaging conditions set in the order of the amounts of light to be received.

12. The image reading method according to Claim 11, wherein imaging conditions are prepared in advance in such a way that no gap will result among fluorescence intensities that are read under their respective conditions even after background subtraction.

13. The image reading method according to any of Claims 1~12, wherein when a subsequent imaging condition is unable to be set in step (e), it is determined not to conduct the imaging process in step (f) after step (e), but to finish the imaging process in step (d).

14. The image reading method according to any of Claim 1~13, wherein the specimen is a biochip.

# FIG.1

# FIG.2

# FIG.3

## FIG.4

# FIG.5

```
                    ┌─────────────┐
                    │    Start    │──S101
                    └─────────────┘
                           │ ◄──────────────────────┐
                           ▼                         │
                    ┌─────────────┐                  │
                    │Capture image│──S102            │
                    └─────────────┘                  │
                           │                         │
                           ▼                         │
                    ┌─────────────┐                  │
                    │  Calculate  │──S103            │
                    └─────────────┘                  │
                           │                         │
                           ▼                         │
                    ┌─────────────┐                  │
                    │  Determine  │──S104            │
                    │saturation status│              │
                    └─────────────┘                  │
                           │      S105               │
                           ▼                         │
                        ╱─────╲                      │
                      ╱ Is condition ╲   NO   S107   │
                     ◄ for finishing satisfied?├──────┐   │
                      ╲             ╱         ▼        │
                        ╲─────╱       ┌────────────────┐│
                           │YES       │ Apply subsequent││
                           │          │imaging condition│┘
                           ▼          └────────────────┘
              ┌─────────────┐
        S106──│     End     │
              └─────────────┘
```

# FIG.6

S201 — ( Start )

S202 — Set imaging condition

S203 — Capture image under imaging condition

S204 — Calculate

S205 — Calculate confirmed imaging condition

S206 — Is confirmed imaging condition chosen? — NO

YES

S207 — Capture image under confirmed imaging condition

S208 — Calculate

S209 — ( End )

## INTERNATIONAL SEARCH REPORT

| International application No. |
| --- |
| PCT/JP2014/074302 |

A. CLASSIFICATION OF SUBJECT MATTER
*G01N21/64(2006.01)i*

According to International Patent Classification (IPC) or to both national classification and IPC

B. FIELDS SEARCHED

Minimum documentation searched (classification system followed by classification symbols)
G01N21/00-21/78, G01N33/48-33/543

Documentation searched other than minimum documentation to the extent that such documents are included in the fields searched
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2007-24604 A (Hamamatsu Photonics Kabushiki Kaisha),<br>01 February 2007 (01.02.2007),<br>claims 1 to 11; paragraphs [0017], [0064]<br>(Family: none) | 1,14<br>2-13 |
| Y<br>A | JP 3834519 B2 (Olympus Corp.),<br>18 October 2006 (18.10.2006),<br>claims 1, 3, 4, 10, 11; paragraph [0017]<br>(Family: none) | 1-4,10-14<br>5-9 |
| Y<br>A | JP 2009-168632 A (Konica Minolta Sensing, Inc.),<br>30 July 2009 (30.07.2009),<br>claim 1; paragraphs [0002], [0027], [0064] to [0071]<br>& US 2009/0179159 A1 & EP 2081016 A2 | 1-4,10-14<br>5-9 |

| ☒ | Further documents are listed in the continuation of Box C. | ☐ | See patent family annex. |
| --- | --- | --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>01 December, 2014 (01.12.14) | Date of mailing of the international search report<br>16 December, 2014 (16.12.14) |
| --- | --- |
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

| International application No. |
| --- |
| PCT/JP2014/074302 |

**C (Continuation).  DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2010-243459 A  (Hitachi High-Technologies Corp.),<br>28 October 2010 (28.10.2010),<br>claims 4 to 7; paragraph [0005]; fig. 2<br>(Family: none) | 1-4,10-14<br>5-9 |
| Y<br>A | WO 2013/035738 A1  (Olympus Corp.),<br>14 March 2013 (14.03.2013),<br>paragraph [0026]<br>& JP 2013-56001 A       & US 2014/0184769 A | 1-4,10-14<br>5-9 |
| Y<br>A | JP 2005-214924 A  (Olympus Corp.),<br>11 August 2005 (11.08.2005),<br>claim 1; paragraphs [0005], [0008], [0019]; fig. 6<br>& US 2005/0170332 A1 | 1-4,10-14<br>5-9 |
| A | JP 4979516 B2  (Mitsubishi Rayon Co., Ltd.),<br>18 July 2012 (18.07.2012),<br>claim 1; paragraph [0012]<br>(Family: none) | 1-14 |

Form PCT/ISA/210 (continuation of second sheet) (July 2009)

**REFERENCES CITED IN THE DESCRIPTION**

**Patent documents cited in the description**

- JP 3834519 B
- JP 3510882 B
- JP 4979516 B

**Non-patent literature cited in the description**

- *Science,* 1995, vol. 270, 467-470
- *Science,* 1991, vol. 251, 767-773